# EUROPEAN PATENT APPLICATION

(11) **EP 4 626 008 A1**
(43) Date of publication of application: **01.10.2025**
(21) Application number: 23894614.9
(22) Date of filing: 22.11.2023
(51) Int. Cl.: H04N 23/52, B60S 1/62

(54) **CLEANING DEVICE AND SENSOR ASSEMBLY**

(30) Priority: 24.11.2022 JP 2022187692; 24.11.2022 JP 2022187693; 24.11.2022 JP 2022187694; 24.11.2022 JP 2022187695
(71) Applicant: Koito Manufacturing Co., Ltd., Tokyo 141-0001 (JP)
(72) Inventor: KASAHARA Ryota, Shizuoka-shi, Shizuoka 424-8764 (JP); KUBOTA Akinobu, Shizuoka-shi, Shizuoka 424-8764 (JP); HACHIYA Taishi, Shizuoka-shi, Shizuoka 424-8764 (JP); HAYAMI Toshihisa, Shizuoka-shi, Shizuoka 424-8764 (JP); MOCHIZUKI Takayoshi, Shizuoka-shi, Shizuoka 424-8764 (JP); YONEMARU Shota, Shizuoka-shi, Shizuoka 424-8764 (JP)
(74) Representative: Hoffmann Eitle
(86) International application number: PCT/JP2023/041921
(87) International publication number: WO 2024/111610

(57) **Abstract**

A cleaning device (13) reduces adhesion of foreign substances to a partition wall located at a position ahead of a sensor provided with a sensing reference axis that is extending forward and is oriented to or downward than a horizontal direction. A first portion (131) is formed with a first opening (1311) that jets fluid toward the partition wall. A second portion (132) is formed with a first conduit (1321) that guides the fluid toward the first portion (131). A left end edge (132a) of the second portion (132) as viewed from a first direction along an up-down direction includes a portion extending on the right of a left end (131a) of the first portion (131) as viewed from the first direction. A right end edge (132b) of the second portion (132) as viewed from the first direction includes a portion extending on the left of a right end (131b) of the first portion (131) as viewed from the first direction.

## Description

### Field

The presently disclosed subject substance relates to a cleaning device configured to reduce adhesion of foreign substances to a partition wall located at a position ahead of a sensor. The present disclosure also relates to a sensor assembly provided with the sensor, the partition wall, and the cleaning device.

### Background

Patent Document 1 discloses a cleaning device configured to jet fluid such as air toward a lens that is located between an imaging element and an object to be imaged, thereby reducing adhesion of foreign substances to the lens. The lens is an example of a partition wall ahead of the sensor.

### Citation List

### Patent Document

Patent Document 1: Japanese Patent Publication No. 2021-120143A

### Summary of the Invention

### Technical Problem

It is desired to suppress occurrence of a situation that a capability of a sensor is reduced due to liquid such as a raindrop blown onto a partition wall ahead of the sensor by fluid jetted toward the lens.

### Solution to Problem

A first illustrative aspect of the presently disclosed subject matter may provide a cleaning device configured to reduce adhesion of foreign substances to a partition wall located at a position ahead of a sensor provided with a sensing reference axis that is extending forward and is oriented to or downward than a horizontal direction, the cleaning device comprising:
a first portion formed with a first opening configured to jet fluid toward the partition wall; and
a second portion formed with a first conduit configured to guide the fluid toward the first portion,
wherein a left end edge of the second portion as viewed from a first direction along an up-down direction includes a portion extending on the right of a left end of the first portion as viewed from the first direction; and
wherein a right end edge of the second portion as viewed from the first direction includes a portion extending on the left of a right end of the first portion as viewed from the first direction.

A second illustrative aspect of the presently disclosed subject matter may provide a sensor assembly, comprising:
a sensor provided with a sensing reference axis that is extending forward and is oriented to or downward than a horizontal direction;
a partition wall located at a position ahead of the sensor; and
a cleaning device configured to reduce adhesion of foreign substances to the partition wall, and including:
   a first portion formed with a first opening configured to jet fluid toward the partition wall; and
   a second portion formed with a first conduit configured to guide the fluid toward the first portion,
wherein a left end edge of the second portion as viewed from a first direction along an up-down direction includes a portion extending on the right of a left end of the first portion as viewed from the first direction; and
wherein a right end edge of the second portion as viewed from the first direction includes a portion extending on the left of a right end of the first portion as viewed from the first direction.

The cleaning device performs jetting of the fluid in order to reduce the adhesion of foreign substances to the partition wall. However, in a case where liquid such as a raindrop adheres to the vicinity of the first opening of the cleaning device, such liquid may be entrained in a flow of the fluid jetted from the first opening so that a substantial amount of the liquid would be blown to the partition wall. The liquid blown to the partition wall may obstruct the field of view of the sensor as a foreign substance, thereby causing reduction of the information acquiring capability thereof.

A raindrop adhering on the upper face tends to merge with another raindrop. The raindrop whose weight is increased by the merging can move downward easily. In particular, in a case where the sensing reference axis of the sensor extending forward is oriented downward than the horizontal direction, the possibility that the liquid reaches the vicinity of the first opening for jetting the fluid toward the partition wall ahead of the sensor is further increased.

With the configuration of each of the first and second illustrative aspects, since an area of the upper face of the cleaning device on which liquid such as a raindrop would adhere can be reduced, it is possible to reduce the possibility that the merged raindrop approaches the first opening. Accordingly, it is possible to reduce occurrence of a situation that the imaging capability of the sensor is degraded due to liquid that is blown onto the partition wall with the fluid jetted toward the partition wall.

A third illustrative aspect of the presently disclosed subject matter may provide a cleaning device configured to reduce adhesion of foreign substances to a sensor provided with a sensing reference axis that is extending forward and is oriented to or downward than a horizontal direction, and to a partition wall located at a position ahead of the sensor, the cleaning device comprising:
a first portion formed with a first opening configured to jet fluid toward the partition wall; and
a second portion formed with a first conduit configured to guide the fluid toward the first portion,
wherein the first portion includes a first upper face having such a shape that at least one of both ends in a left-right direction is located below a portion that is located at a position immediately above the first opening.

A third illustrative aspect of the presently disclosed subject matter may provide a sensor assembly, comprising:
a sensor provided with a sensing reference axis that is extending forward and is oriented to or downward than a horizontal direction;
a partition wall located at a position ahead of the sensor; and
a cleaning device configured to reduce adhesion of foreign substances to the partition wall, and including:
   a first portion formed with a first opening configured to jet fluid toward the partition wall; and
   a second portion formed with a first conduit configured to guide the fluid toward the first portion,
wherein the first portion includes a first upper face having such a shape that at least one of both ends in a left-right direction is located below a portion that is located at a position immediately above the first opening.

The cleaning device performs jetting of the fluid in order to reduce the adhesion of foreign substances to the partition wall. However, in a case where liquid such as a raindrop adheres to the vicinity of the first opening of the cleaning device, such liquid may be entrained in a flow of the fluid jetted from the first opening so that a substantial amount of the liquid would be blown to the partition wall. The liquid blown to the partition wall may obstruct the field of view of the sensor as a foreign substance, thereby causing reduction of the information acquiring capability thereof.

Liquid such as a raindrop adhering on the upper face of the cleaning device, may approach the first opening via the front end of the cleaning device. In particular, in such a configuration that the sensing reference axis of the imaging element extending forward is oriented downward than the horizontal direction, the above situation is more likely to be occurred. However, with the configuration of each of the third and fourth illustrative aspects, since the first upper face has the shape as described above, the liquid adhering to or reaching the portion located immediately above the first opening is prompted to move in the left-right direction. As a result, it is possible to reduce the possibility that liquid such as a raindrop reaches the first opening via the front end of the cleaning device. Accordingly, it is possible to reduce occurrence of a situation that the imaging capability of the sensor is degraded due to liquid that is blown onto the partition wall with the fluid jetted toward the partition wall.

A fifth illustrative aspect of the presently disclosed subject matter may provide a cleaning device configured to reduce adhesion of foreign substances to a sensor provided with a sensing reference axis that is extending forward and is oriented to or downward than a horizontal direction, and to a partition wall located at a position ahead of the sensor, the cleaning device comprising:
a first portion formed with a first opening configured to jet fluid toward the partition wall;
a second portion formed with a first conduit configured to guide the fluid toward the first portion; and
a guide member continuous with at least one of the first portion and the second portion while extending in an up-down direction such that a lower end thereof is located below the first opening,
wherein the guide member is in contact with, at a position located behind the partition wall, a housing that houses the sensor and supports the partition wall.

A sixth illustrative aspect of the presently disclosed subject matter may provide a sensor assembly, comprising:
a sensor provided with a sensing reference axis that is extending forward and is oriented to or downward than a horizontal direction;
a partition wall located at a position ahead of the sensor;
a housing configured to house the sensor and to support the partition wall; and
a cleaning device configured to reduce adhesion of foreign substances to the partition wall, and including:
   a first portion formed with a first opening configured to jet fluid toward the partition wall;
   a second portion formed with a first conduit configured to guide the fluid toward the first portion; and
   a guide member continuous with at least one of the first portion and the second portion while extending in an up-down direction such that a lower end thereof is located below the first opening,
wherein the guide member is in contact with, at a position located behind the partition wall, a housing that houses the sensor and supports the partition wall.

The cleaning device performs jetting of the fluid in order to reduce the adhesion of foreign substances to the partition wall. However, in a case where liquid such as a raindrop adheres to the vicinity of the first opening of the cleaning device, such liquid may be entrained in a flow of the fluid jetted from the first opening so that a substantial amount of the liquid would be blown to the partition wall. The liquid blown to the partition wall may obstruct the field of view of the sensor as a foreign substance, thereby causing reduction of the information acquiring capability thereof.

Liquid adhering to a lower portion of the cleaning device or liquid descending from an upper portion of the cleaning device may move along a lower face of the cleaning device. **In** particular, in a case where the sensing reference axis of the imaging element extending forward is oriented downward than the horizontal direction, the possibility that the liquid reaches the vicinity of the first opening for jetting the fluid toward the partition wall ahead of the sensor is further increased.

However, with the configuration of each of the fifth and sixth illustrative aspects, since the guide member is in contact with the housing at a position behind the partition wall, the liquid approaching the first opening of the cleaning device is prompted to transfer to the housing. In addition, since the lower end of the guide member is in contact with the housing at a position below the first opening, it is possible to reduce the possibility that the liquid transferred to the housing reaches the first opening. Accordingly, it is possible to reduce occurrence of a situation that the imaging capability of the sensor is degraded due to liquid that is blown onto the partition wall with the fluid jetted toward the partition wall.

A seventh illustrative aspect of the presently disclosed subject matter may provide a cleaning device configured to reduce adhesion of foreign substances to a sensor provided with a sensing reference axis that is extending forward and is oriented to or downward than a horizontal direction, and to a partition wall located at a position ahead of the sensor, the cleaning device comprising:
a first portion formed with a first opening configured to jet fluid toward the partition wall;
a second portion formed with a first conduit configured to guide the fluid toward the first portion; and
a first wall portion extending in an up-down direction at a position ahead of the first opening such that a lower end thereof is located below the first opening.

An eighth illustrative aspect of the presently disclosed subject matter may provide a sensor assembly, comprising:
a sensor provided with a sensing reference axis that is extending forward and is oriented to or downward than a horizontal direction;
a partition wall located at a position ahead of the sensor;
a housing configured to house the sensor and to support the partition wall; and
a cleaning device configured to reduce adhesion of foreign substances to the partition wall, and including:
   a first portion formed with a first opening configured to jet fluid toward the partition wall;
   a second portion formed with a first conduit configured to guide the fluid toward the first portion; and
   a first wall portion extending in an up-down direction at a position ahead of the first opening such that a lower end thereof is located below the first opening.

The cleaning device performs jetting of the fluid in order to reduce the adhesion of foreign substances to the partition wall. However, in a case where liquid such as a raindrop adheres to the vicinity of the first opening of the cleaning device, such liquid may be entrained in a flow of the fluid jetted from the first opening so that a substantial amount of the liquid would be blown to the partition wall. The liquid blown to the partition wall may obstruct the field of view of the sensor as a foreign substance, thereby causing reduction of the information acquiring capability thereof.

Liquid such as a raindrop may come from the front side with an environmental air flow, winding caused by a preceding vehicle, or the like. In this case, the liquid may directly approach the first opening without passing through a portion of the cleaning device. However, with the configuration of each of the seventh and eighth illustrative aspects, the liquid coming from the front of the cleaning device is prompted to adhere to the first wall portion. In addition, since the lower end of the first wall portion is located below the first opening, it is possible to reduce the possibility that the liquid adhering to the first wall portion reaches the first opening. Accordingly, it is possible to reduce occurrence of a situation that the imaging capability of the sensor is degraded due to liquid that is blown onto the partition wall with the fluid jetted toward the partition wall.

### Brief Description of Drawings

FIG. 1 illustrates an appearance of a senser assembly according to a first embodiment as viewed from the right side.
FIG. 2 illustrates an appearance of a vehicle in which a cleaning device of FIG. 1 is to be installed.
FIG. 3 illustrates an appearance of the cleaning device of FIG. 1 as viewed from the lower left front side.
FIG. 4 illustrates an appearance of the sensor assembly of FIG. 1 as viewed from the upper side.
FIG. 5 illustrates an appearance of the cleaning device of FIG. 1 as viewed from the front side.
FIG. 6 illustrates another exemplary configuration of the cleaning device of FIG. 1.
FIG. 7 illustrates another exemplary configuration of the cleaning device of FIG. 1.
FIG. 8 illustrates an appearance of a front portion of the cleaning device of FIG. 1 as viewed from the lower left front side.
FIG. 9 illustrates another exemplary configuration of the cleaning device of FIG. 1.
FIG. 10 illustrates an appearance of a senser assembly according to a second embodiment as viewed from the right side.
FIG. 11 illustrates an appearance of the cleaning device of FIG. 10 as viewed from the upper left front side.
FIG. 12 illustrates an appearance of the cleaning device of FIG. 10 as viewed from the lower side.
FIG. 13 illustrates an appearance of the cleaning device of FIG. 10 as viewed from the left side.
FIG. 14 illustrates an appearance of the senser assembly of FIG. 10 as viewed from the front side.
FIG. 15 illustrates an appearance of the cleaning device of FIG. 10 as viewed from the upper left rear side.
FIG. 16 illustrates an appearance of the senser assembly of FIG. 10 as viewed from the lower left front side.

### Description of Embodiments

Exemplary embodiments will be described below in detail with reference to the accompanying drawings. In each of the drawings used in the following descriptions, the scale is changed as required in order to make each member have a recognizable size.

In the accompanying drawings, an arrow F represents a forward direction of the illustrated structure. An arrow B represents a rearward direction of the illustrated structure. An arrow U represents an upward direction of the illustrated structure. An arrow D represents a downward direction of the illustrated structure. An arrow R represents a rightward direction of the illustrated structure. An arrow L represents a leftward direction of the illustrated structure. The expression according to these directions is intended to be used for convenience of explanation and is not intended to limit the attitude of the structure at the time of actual use.

As used herein, the term "front-rear direction" means a direction along the forward direction and the rearward direction described above. As used herein, the term "up-down direction" means a direction along the upward direction and the downward direction described above. As used herein, the term "left-right direction" means a direction along the leftward direction and the rightward direction described above.

As used herein, the expression "extending in the front-rear direction" includes extending at an inclination with respect to the front-rear direction, and means extending at an inclination closer to the front-rear direction than the up-down direction and the left-right direction.

As used herein, the expression "extending in the up-down direction" includes extending at an inclination with respect to the up-down direction, and means extending at an inclination closer to the up-down direction than the front-rear direction and the left-right direction.

As used herein, the expression "extending in the left-right direction" includes extending at an inclination with respect to the left-right direction, and means extending at an inclination closer to the left-right direction than the front-rear direction and the up-down direction.

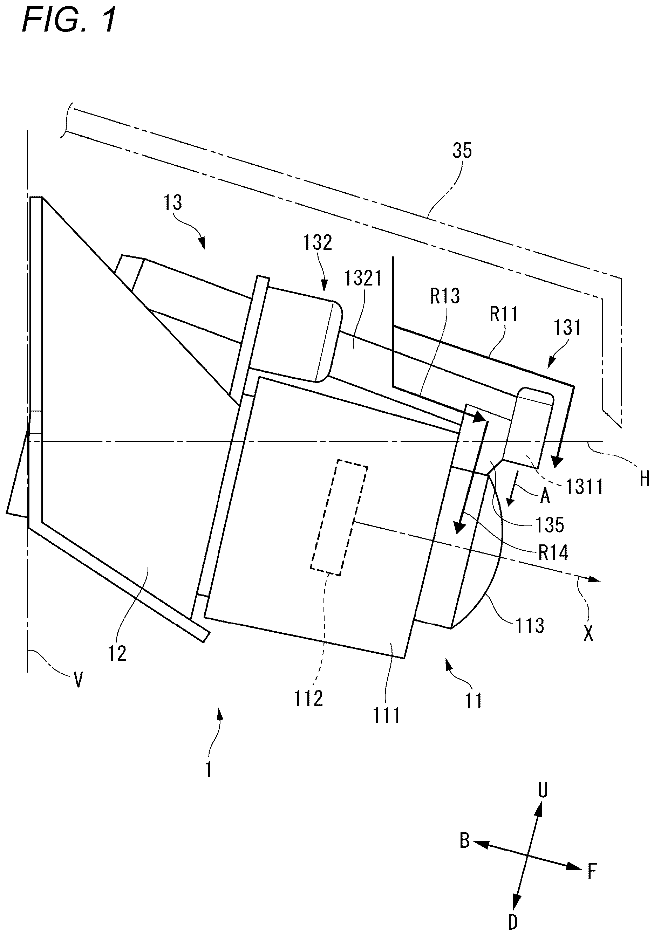

FIG. 1 illustrates an appearance of a sensor assembly 1 according to a first embodiment as viewed from the right side. The sensor assembly 1 includes a camera 11.

The camera 11 includes a housing 111, an imaging element 112, and a lens 113. The housing 111 houses the imaging element 112. The housing 111 supports the lens 113 ahead of the imaging element 112. The lens 113 forms an image of light coming from an object at least ahead of the camera 11 on a light receiving surface of the imaging element 112. The imaging element 112 is configured to output a signal corresponding to the brightness of the optical image. Examples of the imaging element 112 include a CCD sensor and a CMOS sensor. The imaging element 112 is an example of a sensor. The lens 113 is an example of a partition wall.

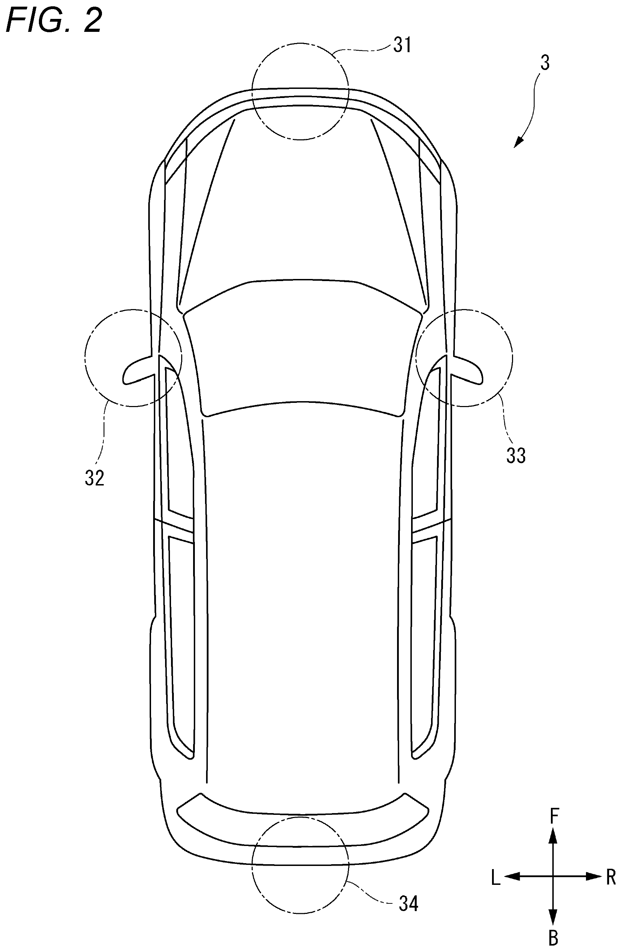

The sensor assembly 1 includes a bracket 12. The sensor assembly 1 is installed in a vehicle 3 illustrated in FIG. 2. The bracket 12 is a member for supporting the sensor assembly 1 at an appropriate position in the vehicle 3. The shape of the vehicle 3 is merely illustrative.

The number and location of the sensor assembly 1 to be installed in the vehicle 3 are appropriately determined according to an object to be imaged. In FIG. 2, a front portion 31, a left side portion 32, a right side portion 33, and a rear portion 34 of the vehicle 3 are illustrated. Accordingly, the front-rear direction, the left-right direction, and the up-down direction of the sensor assembly 1 may not be coincide with the front-rear direction, the left-right direction, and the up-down direction of the vehicle 3, respectively.

In FIG. 1, a line V extends along the vertical direction, and a line H extends along the horizontal direction. A sensing reference axis X extending forward from the imaging element 112 is oriented in or below the horizontal direction under a condition that the sensor assembly 1 is installed in the vehicle 3. The sensing reference axis X defines a reference direction of the imaging performed by the imaging element 112. The sensing reference axis X may be set to correspond to an optical axis of the lens 113.

The sensor assembly 1 includes a cleaning device 13. The cleaning device 13 is a device configured to jet air A toward the lens 113 of the camera 11 to reduce the adhesion of foreign substances to the lens 113. The air A is an example of gas or fluid.

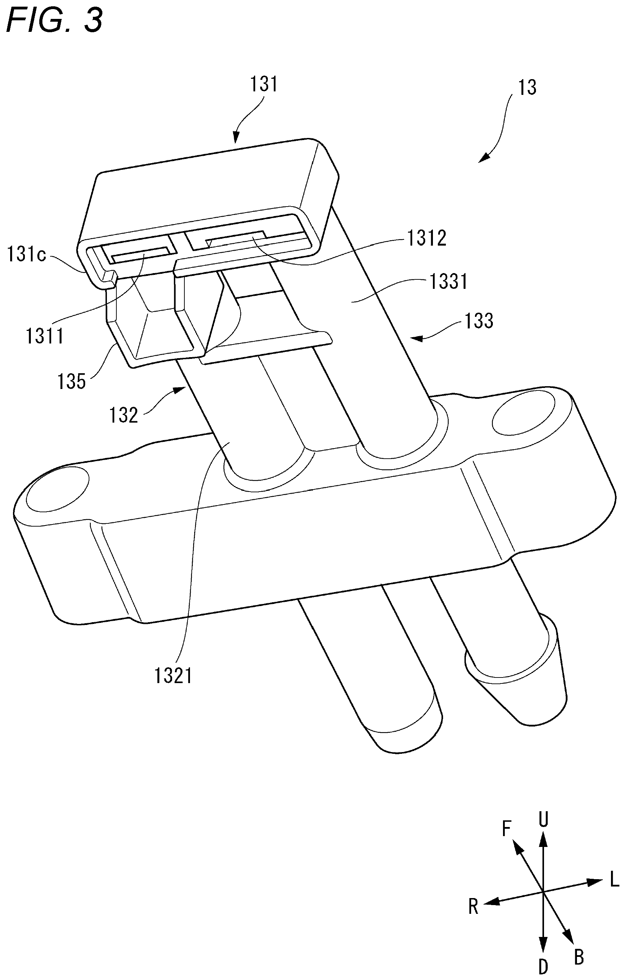

FIG. 3 illustrates an appearance of the cleaning device 13 as viewed from the lower left front side. The cleaning device 13 includes a first portion 131 and a second portion 132. The first portion 131 is formed with a first opening 1311 for jetting air toward the lens 113. A first conduit 1321 for guiding air toward the first portion 131 is formed inside the second portion 132.

As illustrated in FIG. 1, the first conduit 1321 extends along a sensing reference axis X of the imaging element 112 such that a front end portion thereof is located below a rear end portion thereof. The first opening 1311 is located below the first conduit 1321.

The cleaning device 13 performs jetting of the air A in order to reduce the adhesion of foreign substances to the lens 113. However, in a case where liquid such as a raindrop adheres to the vicinity of the first opening 1311 of the cleaning device 13, such liquid may be entrained in a flow of the air A jetted from the first opening 1311 so that a substantial amount of the liquid would be blown to the lens 113. The liquid blown to the lens 113 may obstruct the field of view of the imaging element 112 as a foreign substance, thereby causing reduction of the information acquiring capability thereof. The sensor assembly 1 takes various measures for suppressing occurrence of such a situation.

A symbol R11 represents an exemplary path through which liquid such as a raindrop adhering on an upper face of the cleaning device 13 moves. A raindrop adhering on the upper face tends to merge with another raindrop. The raindrop whose weight is increased by the merging can move downward easily. In particular, in a case where the sensing reference axis X of the imaging element 112 extending forward is oriented downward than the horizontal direction, the possibility that the liquid reaches the vicinity of the first opening 1311 for jetting the air A toward the lens 113 ahead of the imaging element 112 is further increased.

It should be noted that, as used herein, the term "upper face" means one face having a portion whose normal direction is oriented upward than the horizontal direction.

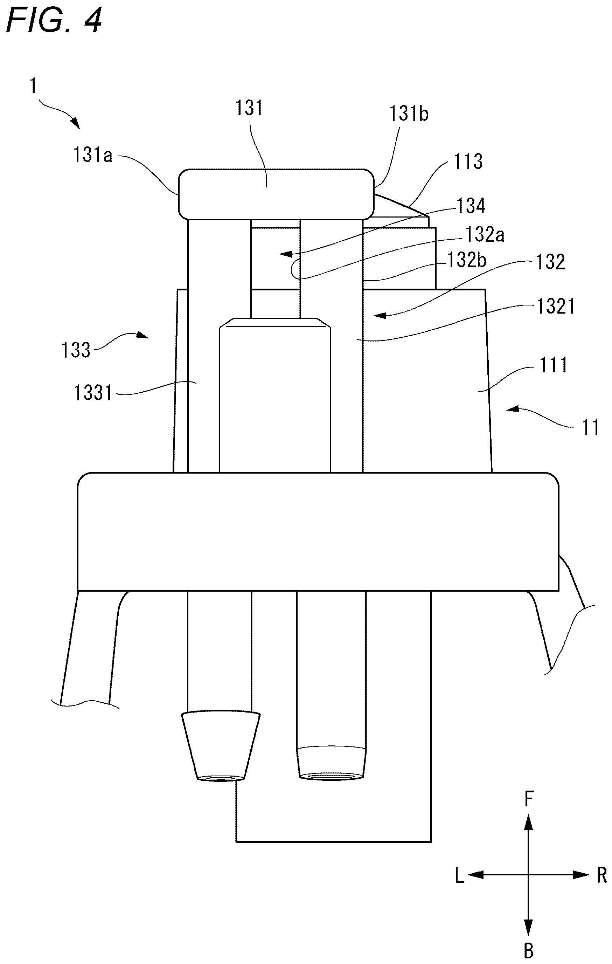

FIG. 4 illustrates an appearance of the sensor assembly 1 as viewed from the upper side. A left end edge 132a of the second portion 132 as viewed from a first direction that is along the up-down direction of the cleaning device 13 has a portion extending on the right of a left end 131a of the first portion 131 as viewed from the first direction. A right end edge 132b of the second portion 132 as viewed from the first direction has a portion extending on the left of a right end 131b of the first portion 131 as viewed from the first direction.

With such a configuration, since an area of the upper face of the cleaning device 13 on which a raindrop would adhere can be reduced, it is possible to reduce the possibility that the merged raindrop approaches the first opening 1311. Accordingly, it is possible to reduce occurrence of a situation that the imaging capability of the imaging element 112 is degraded due to liquid such as a raindrop that is blown onto the lens 113 with the air A jetted toward the lens 113.

As illustrated in FIG. 3, the first portion 131 is formed with a second opening 1312 for jetting a cleaning agent toward the lens 113. The cleaning device 13 includes a third portion 133. A second conduit 1331 for guiding the cleaning agent toward the first portion 131 is formed inside the third portion 133.

Also the second conduit 1331 extends along the sensing reference axis X of the imaging element 112 such that a front end portion thereof is located below a rear end portion thereof. The second opening 1312 is located below the second conduit 1331.

As illustrated in FIG. 4, a gap 134 is formed between the second portion 132 and the third portion 133. Even with such a configuration, since the area of the upper face of the cleaning device 13 on which a raindrop would adhere can be reduced, it is possible to further reduce the possibility that the merged raindrop approaches the first opening 1311.

The gap 134 is so formed as to be located behind the lens 113. With such a configuration, liquid such as a raindrop passing through the gap 134 from the upper side and adhering on the camera 11 is less likely to be entrained in the flow of the air A jetted toward the lens 113. Accordingly, it is possible to further reduce the occurrence of a situation that the imaging capability of the imaging element 112 is degraded due to liquid such as a raindrop that is blown onto the lens 113 with the air A.

As illustrated in FIG. 3, the first opening 1311 is disposed above a lower end 131c of the first portion 131. With such a configuration, even if liquid such as a raindrop reaches the lower end 131c of the first portion 131, it is possible to reduce the possibility that the liquid adheres to the first opening 1311 located thereabove, as well as the possibility that the liquid is blown to the lens 113 with the air A.

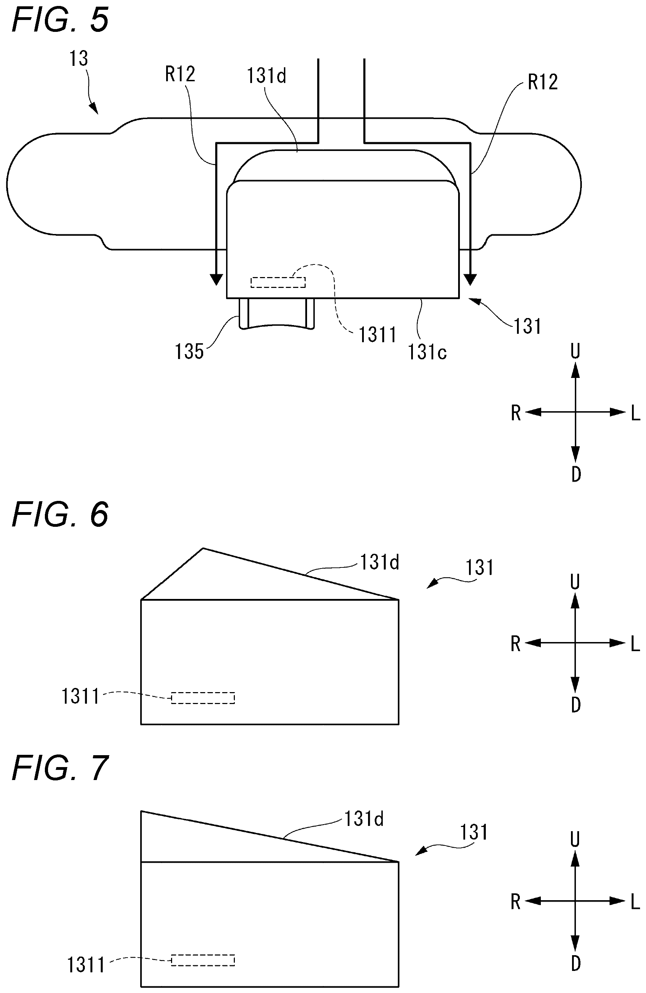

As illustrated in FIG. 5, a first upper face 131d of the first portion 131 has such a shape that both ends in the left-right direction are located below a portion located immediately above the first opening 1311. A symbol R12 represents an exemplary path through which liquid such as a raindrop adhering on the first upper face 131d moves.

As illustrated in FIG. 1 with the symbol R11, liquid such as a raindrop adhering on the upper face of the cleaning device 13 may approach the first opening 1311 via the front end of the cleaning device 13. In particular, in such a configuration that the sensing reference axis X of the imaging element 112 extending forward is oriented downward than the horizontal direction, the above situation is more likely to be occurred.

However, since the first upper face 131d has the shape as described above, the liquid adhering to or reaching the portion located immediately above the first opening 1311 is prompted to move in the left-right direction. As a result, it is possible to reduce the possibility that liquid such as a raindrop reaches the first opening 1311 via the front end of the cleaning device 13. Accordingly, it is possible to reduce occurrence of a situation that the imaging capability of the imaging element 112 is degraded due to liquid that is blown onto the lens 113 with the air A jetted toward the lens 113.

FIG. 6 illustrates another exemplary shape of the first upper face 131d of the first portion 131. As long as the both ends in the left-right direction are located below the portion located immediately above the first opening 1311, the first upper face 131d may not include a flat portion.

As illustrated in FIG. 7, the first upper face 131d of the first portion 131 may have such a shape that one of the both ends in the left-right direction is located below a portion located immediately above the first opening 1311. In other words, the portion located immediately above the first opening 1311 may not be the highest position of the first upper face 131d. In this case, it is preferable that an end on the side distant from the first opening 1311 is located at a lower position.

As illustrated in FIGS. 1, 3, 5, and 8, the cleaning device 13 includes a guide member 135. The guide member 135 extends in the up-down direction continuously from the first portion 131 and the second portion 132. A lower end 135a of the guide member 135 is located below the first opening 1311. The guide member 135 is disposed so as to contact the housing 111 of the camera 11 at a position behind the lens 113.

In FIG. 1, a symbol R13 represents another exemplary path through which liquid such as a raindrop adhering on the cleaning device 13 moves. Liquid adhering to a lower portion of the cleaning device 13 or liquid descending from an upper portion of the cleaning device 13 may move along a lower face of the cleaning device 13. In particular, in a case where the sensing reference axis X of the imaging element 112 extending forward is oriented downward than the horizontal direction, the possibility that the liquid reaches the vicinity of the first opening 1311 for jetting the air A toward the lens 113 ahead of the imaging element 112 is further increased.

However, since the guide member 135 is in contact with the housing 111 of the camera 11 at a position behind the lens 113, the liquid approaching the first opening 1311 of the cleaning device 13 is prompted to transfer to the housing 111 along a path indicated with the symbol R14. In addition, since the lower end 135a of the guide member 135 is in contact with the housing 111 at a position below the first opening 1311, it is possible to reduce the possibility that the liquid transferred to the housing 111 reaches the first opening 1311. Accordingly, it is possible to reduce occurrence of a situation that the imaging capability of the imaging element 112 is degraded due to liquid that is blown onto the lens 113 with the air A jetted toward the lens 113.

In this exemplary embodiment, the guide member 135 is so formed as to be continuous with both the first portion 131 and the second portion 132. However, the guide member 135 may be so formed as to be continuous with at least one of the first portion 131 and the second portion 132.

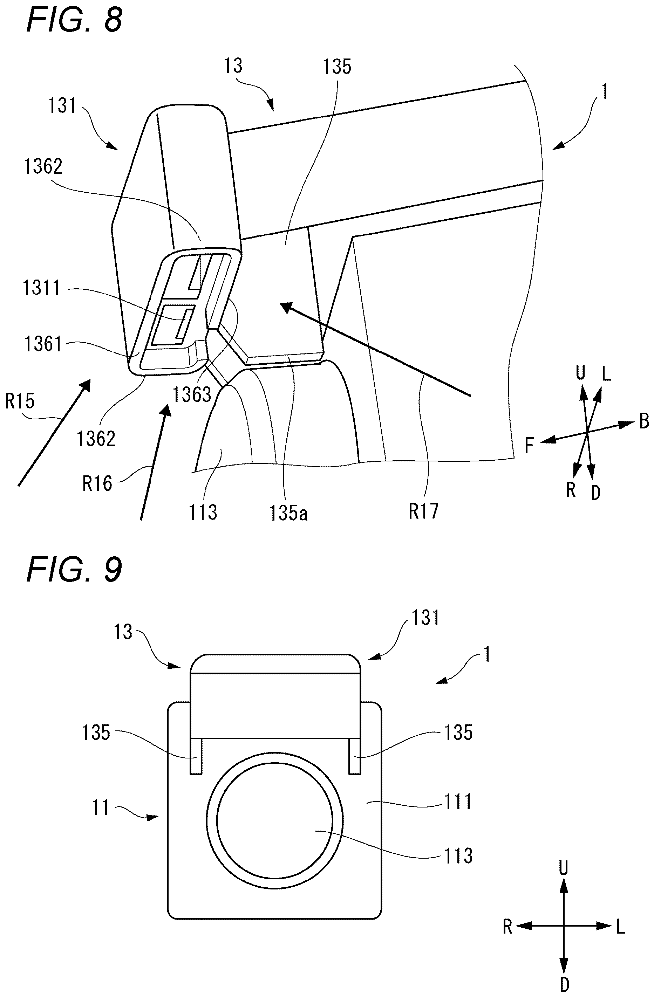

For example, as illustrated in FIG. 9, the guide member 135 may be so formed as to be continuous only with the first portion 131. In this example, the guide member 135 is disposed so as to contact the housing 111 of the camera 11 on the left and right of the lens 113. It should be noted that a configuration in which a single guide member 135 is provided so as to contact the housing 111 of the camera 11 on either the left or right side of the lens 113 may also be employed.

With such a configuration, since it is possible to reduce the possibility that the liquid descending from the lower end 135a of the guide member 135 to the housing 111 reaches the lens 113, it is possible to further reduce the occurrence of a situation that the imaging capability of the imaging element 112 is degraded due to liquid blown onto the lens 113.

As illustrated in FIG. 8, the cleaning device 13 includes a first wall portion 1361. The first wall portion 1361 extends in the up-down direction at a location ahead of the first opening 1311. A lower end of the first wall portion 1361 is located below the first opening 1311.

As illustrated with a path designated by a symbol R15, liquid such as a raindrop may come from the front side with an environmental air flow, winding caused by a preceding vehicle, or the like. In this case, the liquid may directly approach the first opening 1311 without passing through a portion of the cleaning device 13.

However, the liquid coming from the front side of the cleaning device 13 is prompted to adhere onto the first wall portion 1361. In addition, since the lower end of the first wall portion 1361 is located below the first opening 1311, it is possible to reduce the possibility that the liquid adhering to the first wall portion 1361 reaches the first opening 1311. Accordingly, it is possible to reduce occurrence of a situation that the imaging capability of the imaging element 112 is degraded due to liquid such as a raindrop that is blown onto the lens 113 with the air A jetted toward the lens 113.

The cleaning device 13 includes a second wall portion 1362. The second wall portion 1362 extends in the up-down direction on the left and right sides of the first opening 1311. A lower end of the second wall portion 1362 is located below the first opening 1311.

As illustrated with a path designated by a symbol R16, liquid such as a raindrop may come also from the lateral side with an environmental air flow, winding caused by a preceding vehicle, or the like. In this case, the liquid may directly approach the first opening 1311 without passing through a portion of the cleaning device 13.

However, the liquid coming from the lateral side of the cleaning device 13 is prompted to adhere onto the second wall portion 1362. In addition, since the lower end of the second wall portion 1362 is located below the first opening 1311, it is possible to reduce the possibility that the liquid adhering to the second wall portion 1362 reaches the first opening 1311. Accordingly, it is possible to further reduce the occurrence of the situation that the imaging capability of the imaging element 112 is degraded due to liquid such as a raindrop that is blown onto the lens 113 with the air A jetted toward the lens 113.

The cleaning device 13 includes a third wall portion 1363. The third wall portion 1363 extends in the up-down direction at a location behind the first opening 1311. A lower end of the third wall portion 1363 is located below the first opening 1311.

As illustrated with a path designated by a symbol R17, liquid such as a raindrop may come also from the rear side due to changes of an environmental air flow or the like. In this case, the liquid may directly approach the first opening 1311 without passing through a portion of the cleaning device 13. Alternatively, such liquid may merge with the liquid already adhering to the cleaning device 13 and to be prompted to approach the first opening 1311 located ahead. In particular, in a case where the sensing reference axis X of the imaging element 112 extending forward is oriented downward than the horizontal direction, the possibility that the liquid reaches the vicinity of the first opening 1311 for jetting the air A toward the lens 113 ahead of the imaging element 112 is further increased.

However, the liquid coming from the rear side of the first opening 1311 is prompted to adhere onto the third wall portion 1363. In addition, since the lower end of the third wall portion 1363 is located below the first opening 1311, it is possible to reduce the possibility that the liquid adhering to the third wall portion 1363 reaches the first opening 1311. Accordingly, it is possible to further reduce the occurrence of the situation that the imaging capability of the imaging element 112 is degraded due to liquid such as a raindrop that is blown onto the lens 113 with the air A jetted toward the lens 113.

In this exemplary embodiment, the first wall portion 1361, the second wall portion 1362, and the third wall portion 1363 are made continuous to form a peripheral wall surrounding the first opening 1311 and the second opening 1312. However, at least one of the first wall portion 1361, the second wall portion 1362, and the third wall portion 1363 may not be continuous with another adjacent wall portion.

In this exemplary embodiment, the first wall portion 1361 is formed as a single wall portion extending in the left-right direction. However, the first wall portion 1361 may be formed as multiple wall portions arranged in the left-right direction with a gap therebetween.

In this exemplary embodiment, the second wall portion 1362 is formed as a single wall portion extending in the front-rear direction. However, the second wall portion 1362 may be formed as multiple wall portions arranged in the front-rear direction with a gap therebetween.

In this exemplary embodiment, the third wall portion 1363 is formed as a single wall portion extending in the left-right direction. However, the third wall portion 1363 may be formed as multiple wall portions arranged in the left-right direction with a gap therebetween.

As illustrated in FIG. 1, the sensor assembly 1 may be so installed in the vehicle 3 as to be covered by a vehicle body component 35 at least from the upper side. With such a configuration, it is possible to reduce the possibility that liquid such as a raindrop adheres to the cleaning device 13 at least from the upper side.

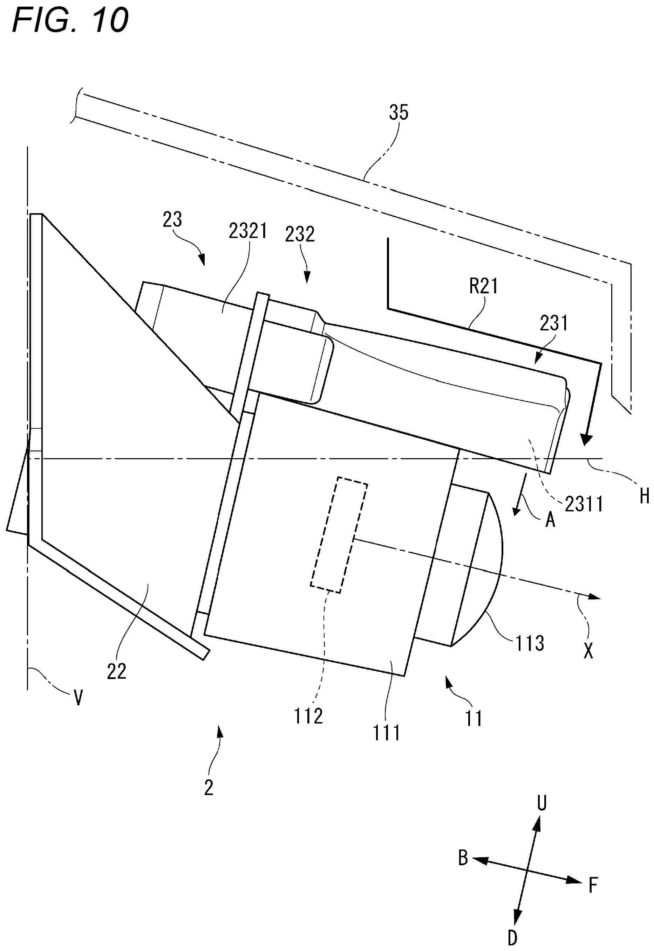

FIG. 10 illustrates an appearance of a sensor assembly 2 according to a second embodiment as viewed from the right side. The sensor assembly 2 includes a camera 11. Since the configuration of the camera 11 is the same as that of the sensor assembly 1 according to the first embodiment, repetitive descriptions thereof will be omitted.

The sensor assembly 2 includes a bracket 22. The sensor assembly 2 is installed in the vehicle 3 illustrated in FIG. 2. The bracket 22 is a member for supporting the sensor assembly 2 at an appropriate position in the vehicle 3.

The sensor assembly 2 includes a cleaning device 23. The cleaning device 23 is a device configured to jet air A toward the lens 113 of the camera 11 to reduce the adhesion of foreign substances to the lens 113.

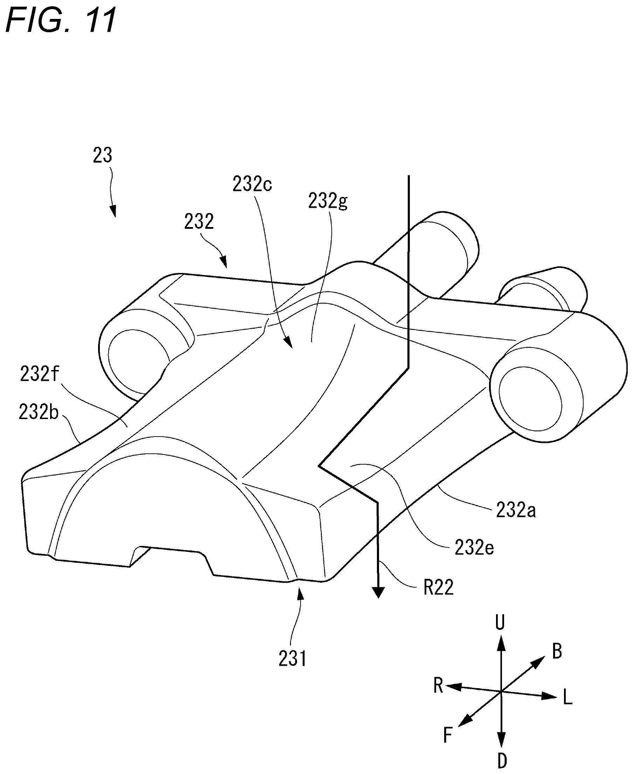

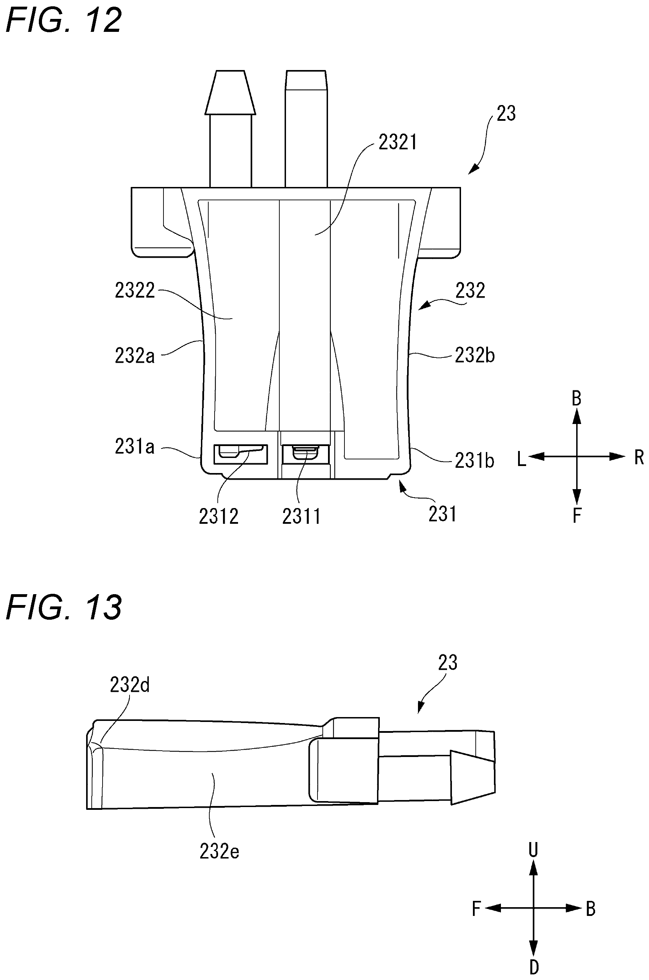

FIG. 11 illustrates an appearance of the cleaning device 23 as viewed from the upper left front side. FIG. 12 illustrates an appearance of the cleaning device 23 as viewed from the lower side. FIG. 13 illustrates an appearance of the cleaning device 23 as viewed from the left side.

The cleaning device 23 includes a first portion 231 and a second portion 232. The first portion 231 is formed with a first opening 2311 for jetting air toward the lens 113. A first conduit 2321 for guiding air toward the first portion 231 is formed inside the second portion 232.

As illustrated in FIG. 10, the first conduit 2321 extends along the sensing reference axis X of the imaging element 112 such that a front end portion thereof is located below a rear end portion thereof. The first opening 2311 is located below the first conduit 2321.

The cleaning device 23 performs jetting of the air A in order to reduce the adhesion of foreign substances to the lens 113. However, in a case where liquid such as a raindrop adheres to the vicinity of the first opening 2311 of the cleaning device 23, such liquid may be entrained in a flow of the air A jetted from the first opening 2311 so that a substantial amount of the liquid would be blown to the lens 113. The liquid blown to the lens 113 may obstruct the field of view of the imaging element 112 as a foreign substance, thereby causing reduction of the information acquiring capability thereof. The sensor assembly 2 takes various measures for suppressing occurrence of such a situation.

A symbol R21 represents an exemplary path through which liquid such as a raindrop adhering on an upper face of the cleaning device 23 moves. A raindrop adhering on the upper face tends to merge with another raindrop. The raindrop whose weight is increased by the merging can move downward easily. In particular, in a case where the sensing reference axis X of the imaging element 112 extending forward is oriented downward than the horizontal direction, the possibility that the liquid such as a raindrop reaches the vicinity of the first opening 2311 for jetting the air A toward the lens 113 ahead of the imaging element 112 is further increased.

As illustrated in FIG. 12, a left end edge 232a of the second portion 232 as viewed from a first direction that is along the up-down direction of the cleaning device 23 has a portion extending on the right of a left end 231a of the first portion 231 as viewed from the first direction. A right end edge 232b of the second portion 232 as viewed from the first direction has a portion extending on the left of a right end 231b of the first portion 231 as viewed from the first direction.

With such a configuration, since an area of the upper face of the cleaning device 23 on which a raindrop would adhere can be reduced, it is possible to reduce the possibility that the merged raindrop approaches the first opening 2311. Accordingly, it is possible to reduce occurrence of a situation that the imaging capability of the imaging element 112 is degraded due to liquid such as a raindrop that is blown onto the lens 113 with the air A jetted toward the lens 113.

As illustrated in FIGS. 11 and 13, the second portion 232 has a second upper face 232c. A front end portion 232d of the second upper face 232c is continuous with a front end of the cleaning device 23. The second upper face 232c has a left recess 232e and a right recess 232f located below the front end portion 232d.

With such a configuration, the liquid such as a raindrop adhering on the second upper face 232c is prompted to stay in the left recess 232e and the right recess 232f. Accordingly, it is reduced the possibility that the liquid reaches the front end of the cleaning device 23. As a result, the possibility that the liquid reaches the first opening 2311 can be further reduced.

In addition, the left recess 232e is continuous with a portion of the left end edge 232a of the second portion 232 extending on the right of the left end 231a of the first portion 231. Similarly, the right recess 232f is continuous with a portion of the right end edge 232b of the second portion 232 extending on the left of the right end 231b of the first portion 231.

With such a configuration, the liquid staying in the left recess 232e is prompted to move to the left. Similarly, the liquid remaining in the right recess 232f is prompted to move to the right. As a result, the liquid adhering to the second upper face 232c is prompted to move along the path illustrated with a symbol R22 in FIG. 11 before reaching the front end of the cleaning device 23. As a result, the possibility that the liquid reaches the first opening 2311 can be further reduced.

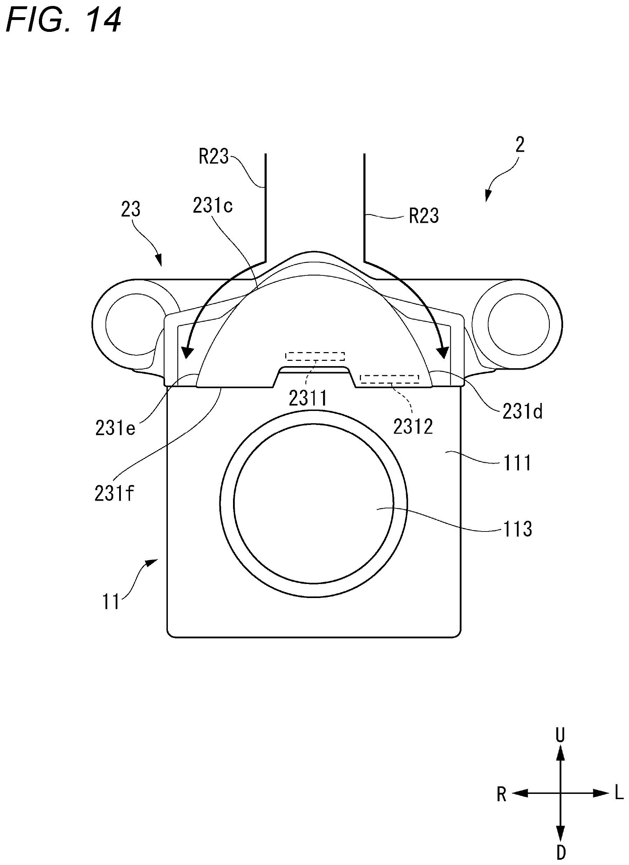

FIG. 14 illustrates an appearance of the sensor assembly 2 as viewed from the front side. In the cleaning device 23, the first upper face 231c of the first portion 231 has such a shape that both ends in the left-right direction are located below a portion located immediately above the first opening 2311. A symbol R23 represents an exemplary path through which liquid such as a raindrop adhering on the first upper face 231c moves.

As illustrated in FIG. 10 with the symbol R21, liquid such as a raindrop adhering on the upper face of the cleaning device 23 may approach the first opening 2311 via the front end of the cleaning device 23. In particular, in such a configuration that the sensing reference axis X of the imaging element 112 extending forward is oriented downward than the horizontal direction, the above situation is more likely to be occurred.

However, since the first upper face 231c has the shape as described above, the liquid adhering to or reaching the portion located immediately above the first opening 2311 is prompted to move in the left-right direction. As a result, it is possible to reduce the possibility that liquid such as a raindrop reaches the first opening 2311 via the front end of the cleaning device 23. Accordingly, it is possible to reduce occurrence of a situation that the imaging capability of the imaging element 112 is degraded due to liquid that is blown onto the lens 113 with the air A jetted toward the lens 113.

A left end portion 231d of the first upper face 231c is located on the left of a left end of the lens 113. Similarly, a right end portion 231e of the first upper face 231c is located on the right of a right end of the lens 113. It should be noted that only one of the left end portion 231d and the right end portion 231e of the first upper face 231c may be disposed on the lateral side of the lens 113.

With such a configuration, since it is possible to reduce the possibility that the liquid prompted to move in the left-right direction along the first upper face 231c drops and reaches the lens 113, it is possible to further reduce the occurrence of a situation that the imaging capability of the imaging element 112 is degraded due to liquid blown onto the lens 113.

As in the example illustrated in FIG. 7, the first upper face 231c of the first portion 231 may have such a shape that one of both ends in the left-right direction is located below a portion located immediately above the first opening 2311. In other words, the portion located immediately above the first opening 2311 may not be the highest position of the first upper face 231c. In this case, it is preferable that an end on the side distant from the first opening 2311 is located at a lower position.

As illustrated in FIG. 14, the first opening 2311 is disposed above a lower end 231f of the first portion 231. With such a configuration, even if liquid such as a raindrop reaches the lower end 231f of the first portion 231, it is possible to reduce the possibility that the liquid adheres to the first opening 2311 located thereabove, as well as the possibility that the liquid is blown to the lens 113 with the air A.

As illustrated in FIG. 12, the first portion 231 is formed with a second opening 2312 for jetting a cleaning agent toward the lens 113. A second conduit 2322 for guiding the cleaning agent toward the first portion 231 is formed inside the second portion 232.

Also the second conduit 2322 extends along the sensing reference axis X of the imaging element 112 such that the front end portion thereof is located below the rear end portion thereof. The second opening 2312 is located below the second conduit 2322.

As illustrated in FIG. 14, the first opening 2311 is disposed above a midsection of the lens 113 in the left-right direction. The second opening 2312 is disposed above the lens 113 on the left of the midsection. The first opening 2311 is formed above the second opening 2312. With such a configuration, it is possible to reduce the possibility that the cleaning agent jetted from the second opening 2312 adheres to the first opening 2311. As a result, it is possible to reduce the occurrence of a situation that the cleaning agent is blown onto the lens 113 with the air A jetted from the first opening 2311 at an unintended timing.

It should be noted that the above-described locational relationship between the first opening 2311 and the second opening 2312 can be applied to the first opening 1311 and the second opening 1312 in the cleaning device 13 according to the first embodiment.

As illustrated in FIG. 11, both ends in the left-right direction of the second upper face 232c are located below a midsection 232g in the same direction. With such a configuration, liquid such as a raindrop adhering on the upper face of the cleaning device 23 is prompted to move in the left-right direction before the liquid moves and reaches the front end of the cleaning device 23. Accordingly, it is possible to further reduce the possibility that liquid such as a raindrop reaches the first opening 2311 via the front end of the cleaning device 23.

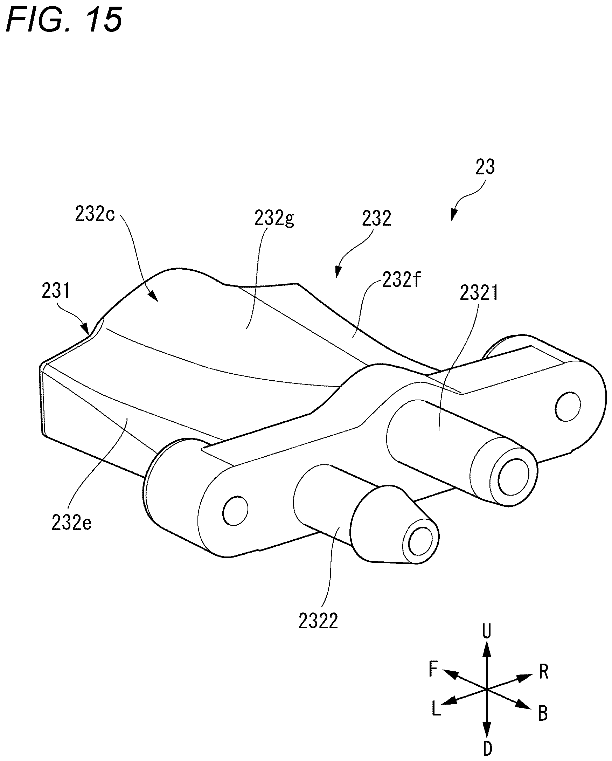

FIG. 15 illustrates an appearance of the cleaning device 23 as viewed from the upper left rear side. The first conduit 2321 is disposed closer to the midsection 232g of the second upper face 232c than the second conduit 2322. The first conduit 2321 is disposed above the second conduit 2322.

With such a configuration, efficient formation of the second upper face 232c having such a shape that both ends in the left-right direction are located below the midsection 232g can be facilitated. In addition, efficient arrangement in which the second opening 2312 is located below the first opening 2311 can be easily realized.

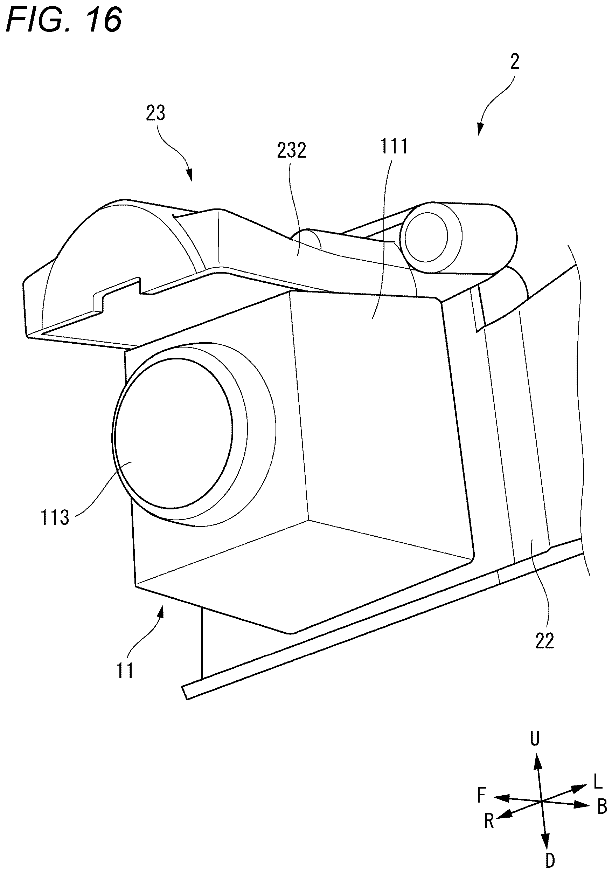

FIG. 16 illustrates an appearance of the sensor assembly 2 as viewed from the lower left front side. A rear part of the second portion 232 of the cleaning device 23 is in contact with an upper face of the housing 111 of the camera 11 without any gap. On the other hand, a front part of the second portion 232 faces the housing 111 with a gap having at least such a size causing no capillary phenomenon.

With such a configuration, it is possible to reduce a possibility that liquid such as a raindrop entering between the lower face of the cleaning device 23 and the upper face of the housing 111 of the camera 11 approaches the first opening 2311 due to the capillary phenomenon.

As illustrated in FIG. 10, the sensor assembly 2 may be so installed in the vehicle 3 as to be covered by a vehicle body component 35 at least from the upper side. With such a configuration, it is possible to reduce the possibility that liquid such as a raindrop adheres to the cleaning device 23 at least from the upper side.

The above embodiments are merely illustrative to facilitate understanding of the presently disclosed subject matter. Each exemplary configuration may be appropriately modified or combined with another exemplary configuration within the scope of the presently disclosed subject matter.

In the cleaning device according to each exemplary embodiment, the air A is jetted in to reduce the adhesion of foreign substances to the lens 113. However, gas or liquid having a specific composition may be jetted. The gas or liquid is an example of fluid.

The sensor assembly according to each exemplary embodiment may include a sensor different from the imaging element 112. Examples of other sensors include a light receiving element provided with a LiDAR (Light Detection and Ranging) device, a receiver element provided with a millimeter wave radar, a receiver element provided with an ultrasonic sensor, and the like. The cleaning device is used to reduce adhesion to a partition wall located at a position ahead of each sensor. In accordance with the type of sensor, the partition wall may not be transparent for visible light.

The sensor assembly according to each exemplary embodiment may be installed in a mobility other than the vehicle 3. Examples of other mobilities include railways, aircrafts, flying objects, ships, and the like. The mobility may not require a driver.

The sensor assembly according to each exemplary embodiment may not be installed in a mobility. For example, the sensor assembly according to each exemplary embodiment is applicable to a system installed in a house, a facility, a traffic infrastructure, or the like and is operated in response to an object entering a specific area.

The present application is based on Japanese Patent Application No. 2022-187692 filed on November 24, 2022, Japanese Patent Application No. 2022-187693 filed on November 24, 2022, Japanese Patent Application No. 2022-187694 filed on November 24, 2022, and Japanese Patent Application No. 2022-187695 filed on November 24, 2022, the entire contents of which are incorporated herein by reference.

## Claims

1. A cleaning device configured to reduce adhesion of foreign substances to a partition wall located at a position ahead of a sensor provided with a sensing reference axis that is extending forward and is oriented to or downward than a horizontal direction, the cleaning device comprising:
a first portion formed with a first opening configured to jet fluid toward the partition wall; and
a second portion formed with a first conduit configured to guide the fluid toward the first portion,
wherein a left end edge of the second portion as viewed from a first direction along an up-down direction includes a portion extending on the right of a left end of the first portion as viewed from the first direction; and
wherein a right end edge of the second portion as viewed from the first direction includes a portion extending on the left of a right end of the first portion as viewed from the first direction.

2. The cleaning device according to claim 1,
wherein the second portion includes an upper face having a front end portion that is continuous with a front end of the cleaning device; and
wherein the upper face includes a portion located below the front end portion.

3. The cleaning device according to claim 2,
wherein the portion of the upper face that is located below the front end portion is continuous with at least one of the portion of the left end edge extending on the right of the left end of the first portion and the portion of the right end edge extending on the left of the right end of the first portion.

4. The cleaning device according to any one of claims 1 to 3,
wherein the first opening is located above a lower end of the first portion.

5. The cleaning device according to any one of claims 1 to 4,
wherein the first opening is configured to jet air;
wherein the first portion is formed with a second opening configured to jet cleaning agent toward the partition wall; and
wherein the first opening is formed at a position located above the second opening.

6. The cleaning device according to any one of claims 1 to 5,
wherein the first opening is configured to jet air;
wherein the first portion is formed with a second opening configured to jet cleaning agent toward the partition wall;
wherein the cleaning device further comprises a third portion formed with a second conduit configured to guide the cleaning agent toward the first portion; and
wherein a gap is formed between the second portion and the third portion.

7. The cleaning device according to claim 6,
wherein the gap is formed at a position located behind the partition wall.

8. The cleaning device according to any one of claims 1 to 7,
wherein the cleaning device is adapted to be installed in a mobility.

9. A sensor assembly, comprising:
a sensor provided with a sensing reference axis that is extending forward and is oriented to or downward than a horizontal direction;
a partition wall located at a position ahead of the sensor; and
a cleaning device configured to reduce adhesion of foreign substances to the partition wall, and including:
a first portion formed with a first opening configured to jet fluid toward the partition wall; and
a second portion formed with a first conduit configured to guide the fluid toward the first portion,
wherein a left end edge of the second portion as viewed from a first direction along an up-down direction includes a portion extending on the right of a left end of the first portion as viewed from the first direction; and
wherein a right end edge of the second portion as viewed from the first direction includes a portion extending on the left of a right end of the first portion as viewed from the first direction.

10. The sensor assembly according to claim 9,
wherein the sensor is an imaging element;
wherein the partition wall is a lens; and
wherein the sensing reference axis corresponds to an optical axis of the lens.

11. The sensor assembly according to claim 9 or 10,
wherein the sensor assembly is adapted to be installed in a mobility.

12. A cleaning device configured to reduce adhesion of foreign substances to a sensor provided with a sensing reference axis that is extending forward and is oriented to or downward than a horizontal direction, and to a partition wall located at a position ahead of the sensor, the cleaning device comprising:
a first portion formed with a first opening configured to jet fluid toward the partition wall; and
a second portion formed with a first conduit configured to guide the fluid toward the first portion,
wherein the first portion includes a first upper face having such a shape that at least one of both ends in a left-right direction is located below a portion that is located at a position immediately above the first opening.

13. The cleaning device according to claim 12,
wherein the second portion includes a second upper face having such a shape that at least one of both ends in the left-right direction is located below a midsection in the left-right direction.

14. The cleaning device according to claim 13,
wherein the second upper face includes a front end portion that is continuous with a front end of the cleaning device; and
wherein the second upper face includes a portion located below the front end portion.

15. The cleaning device according to any one of claims 12 to 14,
wherein the first opening is located above a lower end of the first portion.

16. The cleaning device according to any one of claims 12 to 15,
wherein the first opening is configured to jet air;
wherein the first portion is formed with a second opening configured to jet cleaning agent toward the partition wall; and
wherein the first conduit is located at a position that is above the second conduit and is closer to a midsection of the second portion in the left-right direction than the second conduit.

17. The cleaning device according to any one of claims 12 to 16,
wherein the first opening is configured to jet air;
wherein the first portion is formed with a second opening configured to jet cleaning agent toward the partition wall; and
wherein the first opening is formed at a position located above the second opening.

18. The cleaning device according to any one of claims 12 to 17,
wherein the cleaning device is adapted to be installed in a mobility.

19. A sensor assembly, comprising:
a sensor provided with a sensing reference axis that is extending forward and is oriented to or downward than a horizontal direction;
a partition wall located at a position ahead of the sensor; and
a cleaning device configured to reduce adhesion of foreign substances to the partition wall, and including:
a first portion formed with a first opening configured to jet fluid toward the partition wall; and
a second portion formed with a first conduit configured to guide the fluid toward the first portion,
wherein the first portion includes a first upper face having such a shape that at least one of both ends in a left-right direction is located below a portion that is located at a position immediately above the first opening.

20. The sensor assembly according to claim 19,
wherein the first surface satisfies at least one of a first condition and a second condition;
wherein the first condition is that a left end of the first surface is located on the left of a left end of the partition wall; and
wherein the second condition is that a right end of the first surface is located on the right of a right end of the partition wall.

21. The sensor assembly according to claim 19 or 20,
wherein the sensor is an imaging element;
wherein the partition wall is a lens; and
wherein the sensing reference axis corresponds to an optical axis of the lens.

22. The sensor assembly according to any one of claims 19 to 21,
wherein the sensor assembly is adapted to be installed in a mobility.

23. A cleaning device configured to reduce adhesion of foreign substances to a sensor provided with a sensing reference axis that is extending forward and is oriented to or downward than a horizontal direction, and to a partition wall located at a position ahead of the sensor, the cleaning device comprising:
a first portion formed with a first opening configured to jet fluid toward the partition wall;
a second portion formed with a first conduit configured to guide the fluid toward the first portion; and
a guide member continuous with at least one of the first portion and the second portion while extending in an up-down direction such that a lower end thereof is located below the first opening,
wherein the guide member is in contact with, at a position located behind the partition wall, a housing that houses the sensor and supports the partition wall.

24. The cleaning device according to claim 23,
wherein the guide member is in contact with the housing at a position located at least one of on the left and the right of the partition wall.

25. The cleaning device according to claim 23 or 24,
wherein the first opening is located above a lower end of the first portion.

26. The cleaning device according to any one of claims 23 to 25,
wherein the first opening is configured to jet air;
wherein the first portion is formed with a second opening configured to jet cleaning agent toward the partition wall; and
wherein the first opening is formed at a position located above the second opening.

27. The cleaning device according to any one of claims 23 to 26,
wherein the cleaning device is adapted to be installed in a mobility.

28. A sensor assembly, comprising:
a sensor provided with a sensing reference axis that is extending forward and is oriented to or downward than a horizontal direction;
a partition wall located at a position ahead of the sensor;
a housing configured to house the sensor and to support the partition wall; and
a cleaning device configured to reduce adhesion of foreign substances to the partition wall, and including:
a first portion formed with a first opening configured to jet fluid toward the partition wall;
a second portion formed with a first conduit configured to guide the fluid toward the first portion; and
a guide member continuous with at least one of the first portion and the second portion while extending in an up-down direction such that a lower end thereof is located below the first opening,
wherein the guide member is in contact with, at a position located behind the partition wall, a housing that houses the sensor and supports the partition wall.

29. The sensor assembly according to claim 28,
wherein the sensor is an imaging element;
wherein the partition wall is a lens; and
wherein the sensing reference axis corresponds to an optical axis of the lens.

30. The sensor assembly according to claim 28 or 29,
wherein the sensor assembly is adapted to be installed in a mobility.

31. A cleaning device configured to reduce adhesion of foreign substances to a sensor provided with a sensing reference axis that is extending forward and is oriented to or downward than a horizontal direction, and to a partition wall located at a position ahead of the sensor, the cleaning device comprising:
a first portion formed with a first opening configured to jet fluid toward the partition wall;
a second portion formed with a first conduit configured to guide the fluid toward the first portion; and
a first wall portion extending in an up-down direction at a position ahead of the first opening such that a lower end thereof is located below the first opening.

32. The cleaning device according to claim 31, further comprising:
a second wall portion extending in the up-down direction at a position that is at least one of on the left and the right of the first opening such that a lower end thereof is located below the first opening.

33. The cleaning device according to claim 31 or 32, further comprising:
a third wall portion extending in the up-down direction at a position behind the first opening such that a lower end thereof is located below the first opening.

34. The cleaning device according to any one of claims 31 to 33,
wherein the first opening is configured to jet air;
wherein the first portion is formed with a second opening configured to jet cleaning agent toward the partition wall; and
wherein the first opening is formed at a position located above the second opening.

35. The cleaning device according to any one of claims 31 to 34,
wherein the cleaning device is adapted to be installed in a mobility.

36. A sensor assembly, comprising:
a sensor provided with a sensing reference axis that is extending forward and is oriented to or downward than a horizontal direction;
a partition wall located at a position ahead of the sensor;
a housing configured to house the sensor and to support the partition wall; and
a cleaning device configured to reduce adhesion of foreign substances to the partition wall, and including:
a first portion formed with a first opening configured to jet fluid toward the partition wall;
a second portion formed with a first conduit configured to guide the fluid toward the first portion; and
a first wall portion extending in an up-down direction at a position ahead of the first opening such that a lower end thereof is located below the first opening.

37. The sensor assembly according to claim 36,
wherein the sensor is an imaging element;
wherein the partition wall is a lens; and
wherein the sensing reference axis corresponds to an optical axis of the lens.

38. The sensor assembly according to claim 36 or 37,
wherein the sensor assembly is adapted to be installed in a mobility.
